# EUROPEAN PATENT APPLICATION

(11) **EP 0 870 961 A1**
(43) Date of publication of application: **14.10.1998**
(21) Application number: 98101457.4
(22) Date of filing: 28.01.1998
(51) Int. Cl.: F16L 1/00, F16L 31/00, A44B 19/00, A45C 13/10

(54) **Ventilation duct with zip fastener joints**

(30) Priority: 08.04.1997 SE 9701275
(71) Applicant: SwedTarp AB, 240 30 Marieholm (SE)
(72) Inventor: Magnusson, Bo, 412 74 Göteborg (SE)
(74) Representative: Magnusson, Gustav

(57) **Abstract**

The present invention relates to flexible ventilation tubes (1,2) which are intended to be jointed together to form a longer, continuous ventilation channel or duct. A zip-fastener half (6,7) is disposed at each end of each tube (1,2). On jointing, the zip-fastener halves (6,7) are connected together and closed in the normal manner with the aid of a zip-runner. The zip-fastener halves are disposed in such a manner that the tube ends (3,4) overlap one another, the one tube end (4) covering the outside of the zip-fastener. The inside of the zip-fastener is covered by other tube end (3) or a specifically sealing foil (9). Jointing takes place in such a direction that the pressure of the air flow (8) urges the tube end (3) or the foil (9) against the inside of the zip-fastener.

## Description

The present invention relates to ventilation tubes disposed to facilitate jointing according to the preamble to appended Claim 1. In, for example, the driving of tunnels which are longer than approx. 30 m, use is made of fans which, via a tube or conduit system, blow in fresh air and withdraw spent air, respectively, from a work site. As driving of the tunnel advances, it becomes necessary to joint on new tube sections.

At present, it is common practice to employ, for the jointing operation, a system in which each tube section is provided with a steel ring at one end. When a new tube section is jointed on, this is moved in a distance past the steel ring, the tube material is relatively elastic, for which reason this operation may be carried out without difficulty. Thereafter, a split coupling ring is past in over and tightened over the steel ring, approximately like a hose clamp, in order to make an airtight joint. The disadvantages inherent in this prior art technology are, among other things, that the steel ring takes up extra space on storage and transport, that it is a relatively heavy operation to tighten the coupling ring, that the coupling ring does not seal throughout the entire circumference, that there is often a tendency for the coupling ring to abut only in the proximity of the screw, and that the steel ring may easily be deformed on transport and handling. A deformed or warped steel ring makes it more difficult to obtain a tight joint. There is also a risk that the joint opens when the coupling ring is tightened.

One object of the present invention is to provide a jointing of tube sections in which the above-outlined problems are obviated. A further object of the present invention is that the jointing operation may be made simply and rapidly without the need of special tools. It must also be possible to carry out the jointing operation in the dusty and dirty environment where ventilation tubes of the type under consideration here are normally employed.

The above-outlined objects are attained by a ventilation tube as disclosed in the characterizing clause of appended Claim 1.

Alternative embodiments of the present invention are disclosed in the appended subclaims.

The present invention will now be described in greater detail below, with the aid of embodiments illustrated in the accompanying drawings. In the accompanying drawings:
- Fig. 1: is a section through the position of a joint between two tube sections according to a first embodiment; and
- Fig. 2: is a section corresponding to that of Fig. 1 of an alternative embodiment of the present invention.

The embodiments illustrated in the figures show the end 3 of a first tube 1 which has been united with the end 4 of a second tube 2. The first tube 1 has a zip-fastener half 6 which, on uniting of the tubes 1, 2, co-operates with a zip-fastener half 7 in the second tube 2.

It will be assumed that each individual tube 1, 2 has one end of each type according to the figures.

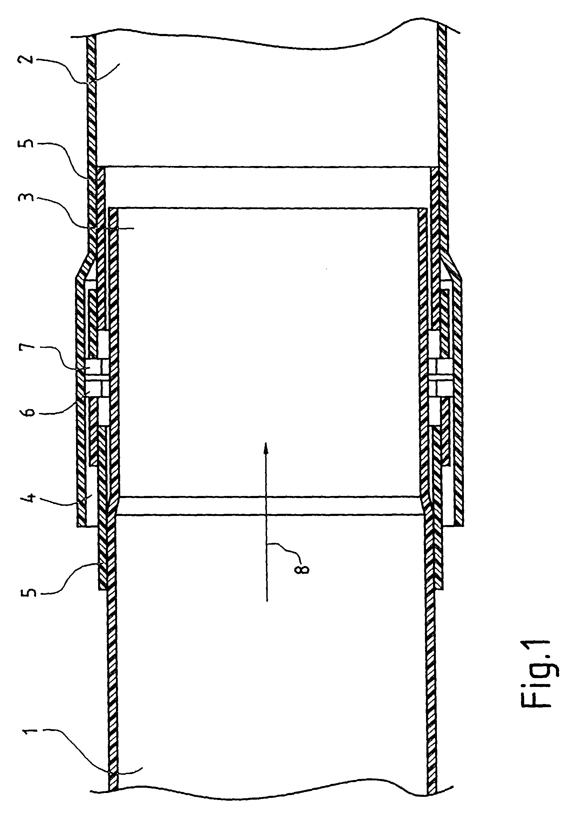

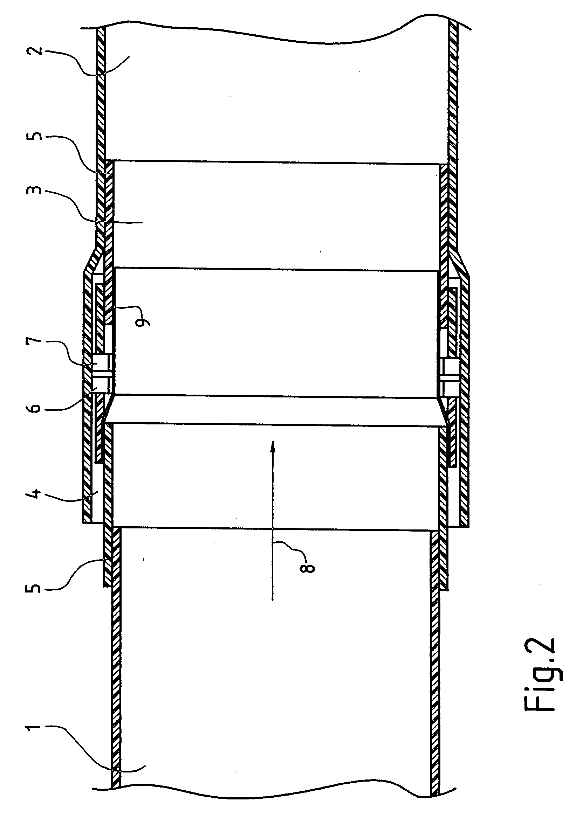

At the one end 3 of each individual tube 1, 2, the zip-fastener half 6 is disposed on the outer diameter of the tube. At the other end 4 of each respective tube 1, 2, the zip-fastener half 7 is disposed on the inner diameter of the tube. Each zip-fastener half 6, 7 is, in the embodiment according to Fig. 1, disposed a short distance in from the outermost tube end in order that each respective projecting tube end 3, 4 is to cover the zip-fastener 6, 7 when the jointing operation is completed, both on the inside and the outside. After the jointing operation, the tube ends 3, 4 thus overlap one another. In the embodiment according to Fig. 2, the zip-fastener half 6 is, at one end, disposed directly at the end edge of the tube.

In the illustrated embodiments, the zip-fastener halves 6, 7 are stitched in place each to a joint section 5. The joint sections 5 are then welded to each respective tube end 3, 4 at the outer and inner diameter respectively, of the tube.

In other embodiments, the zip-fastener halves 6, 7 are welded in place directly to each respective tube 1, 2. The type of securement of the zip-fastener which is selected depends, among other things, on the material from which the zip-fastener is manufactured. For welding, it is necessary that at least the outer layer consists of a suitable plastic material. In other embodiments, glue or a seam is employed in order to secure the joint sections and/or the zip-fastener halves.

In the embodiment illustrated in Fig. 2, the zip-fastener half 6 is disposed directly on the outer end of the first tube 1, a foil 9 being, however, provided in order, after the jointing operation, to abut against the inner diameter of the formed tube system and covering zip-fastener 6, 7. In the same manner as in the embodiment according to Fig. 1, the second tube end 4 projects, after the jointing operation, out over and covers the zip-fastener 6, 7 from the outside.

Thanks to the zip-fastener of plastic, storage and transport of the tubes 1, 2 is facilitated, since the tubes may be folded or rolled up to smaller packages.

In the jointing operation, the tubes 1, 2 are disposed such that the sealing joint 9 or the tube end 3 which covers the zip-fastener 6, 7 on the inside is turned to face with its outermost, free end in the direction of the air flow as shown by means of the arrow 8 in the figures. As a result, the air pressure in the tube system will urge the covering foil 9 or tube end 3 against the inner diameter of the tube, the zip-fastener 6, 7 being then sealed. The higher the air pressure in the tube, the better the seal will be. The pressure in the air flow inflates the tube to tubular or conduit form.

When a new tube 2 is jointed on, the tube end 4 of this tube 2 is rolled back so that the zip-fastener half 7 is exposed. Thereafter, the zip-fastener is, in the normal manner, connected together and fastened by means of a zip-runner. Thereafter, the backwardly peeled tube end 4 is displaced forwards and covers the interconnected zip-fastener 6, 7.

## Claims

1. A flexible ventilation tube (1,2) which is intended to be jointed to other ventilation tubes (1,2) in order to form a longer, continuous ventilation tube, **characterized** in that one zip-fastener half (6,7) is disposed at each tube end (3,4); that one tube end (4), after jointing to an additional tube (1), covers the outside of the zip-fastener (6,7); and that at least one of the zip-fastener halves (7) is disposed a short distance in from the edge of the tube end.

2. The flexible ventilation tube as claimed in Claim 1, **characterized** in that each respective zip-fastener part (6,7) is secured to a joint section (5) which in turn is secured on the outside of the tube (1,2) at one tube end (4), and on the inside of the tube (1,2) at the other tube end (3).

3. The flexible ventilation tube as claimed in Claim 1, **characterized** in that each respective zip-fastener part (6,7) is secured on the inside of the tube (1,2) at the one tube end (4), and at the outside of the tube (1,2) at the other tube end (3).

4. The flexible ventilation tube as claimed in any of the preceding Claims, **characterized** in that a seal is disposed on the inside of the zip-fastener (6,7) in such a manner that it is forced by air pressure in the tube against the zip-fastener (6,7).

5. The flexible ventilation tube as claimed in Claim 4, **characterized** in that the seal on the inside of the zip-fastener (6,7) consists of the tube end (3) of the one tube (1).

6. The flexible ventilation tube as claimed in Claim 4, **characterized** in that the seal on the inside of the zip-fastener (6,7) consists of a foil (9) secured in conjunction with the one zip-fastener half (6).

7. The flexible ventilation tube as claimed in Claim 6, **characterized** in that the one zip-fastener half (6) is secured to the outer edge of the tube end (3).

8. The flexible ventilation tube as claimed in any of the preceding Claims, **characterized** in that the joint sections (5) and the zip-fastener halves (6,7) are secured at the tube end (3,4) and the joint part (5) respectively by means of welding, gluing or a seam.

9. The flexible ventilation tube as claimed in any of the preceding Claims, **characterized** in that, after jointing, the tube ends (3,4) overlap one another.
